# EUROPÄISCHE PATENTSCHRIFT

(11) **EP 0 721 620 B1**
(45) Veröffentlichungstag und Bekanntmachung des Hinweises auf die Patenterteilung: **28.05.1997**
(21) Anmeldenummer: 94926801.5
(22) Anmeldetag: 20.09.1994
(51) Int. Cl.: G06F 11/00

(54) **TRACER-SYSTEM ZUR FEHLERANALYSE IN LAUFENDEN REALZEITSYSTEMEN**
TRACER SYSTEM FOR ANALYSING ERRORS OF RUNNING REAL TIME SYSTEMS
SYSTEME DE RECHERCHE PERMETTANT D'EFFECTUER UNE ANALYSE DE DEFAUTS DE SYSTEMES EN TEMPS REEL PENDANT LEUR FONCTIONNEMENT

(30) Priorität: 28.09.1993 DE 4332992
(43) Veröffentlichungstag der Anmeldung: 17.07.1996
(73) Patentinhaber: SIEMENS AKTIENGESELLSCHAFT, 80333 München (DE)
(72) Erfinder: KLEBER, Ulrich, D-80689 München (DE); GOLLER, Gerhard, D-82024 Taufkirchen (DE); NEUHOFF, Jörg, D-81549 München (DE); KELLER, Hans-Jörg, D-85521 Ottobrunn (DE)
(86) Internationale Anmeldenummer: DE9401093
(87) Internationale Veröffentlichungsnummer: WO9509396

(56) Entgegenhaltungen:
- US-A- 4 462 077
- IBM TECHNICAL DISCLOSURE BULLETIN, Bd.16, Nr.2, Juli 1973, NEW YORK US Seite 541 J. F. GRANT 'Nondegrading operating system hooking'
- IBM TECHNICAL DISCLOSURE BULLETIN, Bd.31, Nr.8, Januar 1989, NEW YORK US Seiten 450 - 452 'Method for recording program execution'

## Beschreibung

Aus der Entwicklung von immer komplexer werdenden Realzeit-Systemen, z. B. Vermittlungssytemen, ist die Forderung nach entsprechenden Test- und Fehleranalysemöglichkeiten erwachsen. So gibt es bereits eine Vielzahl von Fehleranalysesystemen, die eine Fehlerlokalisierung in derart komplexen Systemen erleichtern und mit deren Hilfe umfangreiche Fehleranalysevorgänge durchgeführt und aufgezeichnet werden können. Ein Beispiel für derartige Test- und Fehleranalysesysteme sind die sogenannten Tracer-Systeme.

Es ist bekannt, solche Tracer-Systeme über spezielle Anschlußeinheiten an die zu testenden Einheiten des Realzeitsystems anzuschließen, wobei die in diesen Einheiten ablaufenden Vorgänge über diese speziellen Anschlußeinheiten zum Tracer-System geführt und dort mitprotokolliert und ausgewertet werden. Bei dem Anschluß dieser Tracer-Systeme müssen die zu untersuchenden Realzeitsysteme bzw. zumindest die jeweils zu untersuchenden Einheiten des Realzeitsystems abgeschaltet werden. Dies ist aber bei vielen Realzeitsystemen, insbesondere bei Vermittlungssystemen unter allen Umständen zu vermeiden, da insbesondere an Vermittlungssysteme extrem hohe Anforderungen bezüglich der Ausfallsicherheit gestellt werden.

Aus IBM Technical Disclosure Bulletin, Bd. 16, Nr. 2, Juli 1973, New York US, Seite 541, J.F. Grant "Nondegrading operation system hooking" ist ein Tracer-System gemäß dem Oberbegriff des Anspruchs 1 bekannt.

Der Erfindung liegt die Aufgabe zugrunde, ein Tracer-System anzugeben, das eine Fehleranalyse während des laufenden Betriebs eines Realzeitsystems durchführen kann, ohne dabei den Nutzbetrieb des Realzeitsystems signifikant einzuschränken.

Diese Aufgabe wird durch die Merkmale des Anspruchs 1 gelöst.

Durch die erfindungsgemäße Generierung von Trace-Routinen, die während des Trace-Vorgangs ermittelte Daten in Zwischenspeichern ablegen, kann der Nutzbetrieb sofort weitergeführt werden, ohne daß er durch den Trace-Vorgang an einem jeweiligen Trace-Punkt merklich unterbrochen wird.

Eine weitere Ausgestaltung der Erfindung ist durch Anspruch 2 angegeben. Durch diese Ausgestaltung wird das Verlassen eines Trace-Punktes dynamisch optimiert.

Eine weitere Ausgestaltung der Erfindung ist durch Anspruch 3 angegeben. Durch diese Ausgestaltung wird ein rasches Auffinden der bezüglich eines Trace-Punktes nötigen Verwaltungsdaten gewährleistet.

Eine weitere Ausgestaltung der Erfindung ist durch Anspruch 4 angegeben. Durch diese Ausgestaltung der Erfindung wird vermieden, daß das Tracer-System den Nutzbetrieb des Realzeitsystems in unzulässiger Weise beeinträchtigt.

Im folgenden wird ein Ausführungsbeispiel der Erfindung anhand der Zeichnung näher erläutert.

Figur 1 zeigt den Ablauf des erfindungsgemäßen Trace-Verfahrens anhand der einzelnen Software-Mittel des erfindungsgemäßen Tracer-Systems.

Figur 2 zeigt die Funktion des Aktivierungsmittels des erfindungsgemäßen Tracer-Systems.

Figur 3 zeigt die Funktion des Überwachungsmittels des erfindungsgemäßen Tracer-Systems.

Figur 4 zeigt die Funktion des Ablaufmittels zur Steuerung des Ablauf des Trace-Vorgangs.

Das grundlegende Prinzip des erfindungsgemäßen Tracer-Systems ist es, daß es zum einen, ähnlich einem konventionellen Debugger, Umleitungsbefehle (Sonden) in den Programmspeicher einbringt (d. h. das Originalprogramm an gezielten Stellen mit Hilfe eines speziellen Maschinenbefehls überschreibt), oder besondere Hardware-Register zur Festlegung von zu überwachenden Speicherbereichen beschreibt, zum anderen jedoch beim Erreichen dieser Haltepunkte das Realzeitsystem nicht anhält, um Daten auszugeben, oder auf weitere Kommandos zu warten. Stattdessen muß der Bediener bereits vor dem Aktivieren des Trace-Vorgangs entscheiden, welche Daten ihn an den Haltepunkten interessieren. Diese Daten werden dann während des Trace-Vorgangs in einen speziellen Datenspeicher (Trace-Zwischenspeicher) kopiert und können später ausgelesen werden. Da bei dem erfindungsgemäßen Tracer-System an Haltepunkten nicht angehalten wird, werden diese Haltepunkte im folgenden Trace-Punkte genannt.

Im Gegensatz zu Tracer-Systemen, die durch Hardware realisiert sind, ist das erfindungsgemäße Tracer-System als Software-System im Realzeitsystem vorhanden und kann durch administrative Kommandos aktiviert werden.

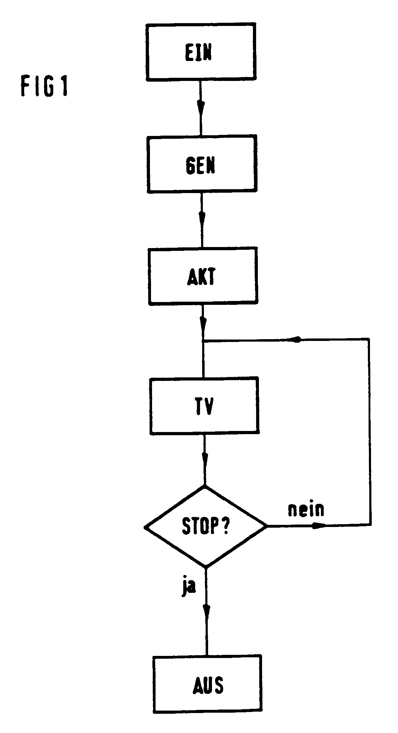

Figur 1 zeigt den Ablauf des erfindungsgemäßen Trace-Verfahrens anhand der einzelnen Software-Mittel des erfindungsgemäßem Tracer-Systems.

In einem ersten Verfahrensschritt empfängt ein Eingabemittel (EIN) vom Bediener des Tracer-Systems Definitionen für die einzelnen Trace-Punkte. Dabei werden als Trace-Punkte entweder Adressen im Programmspeicher (Ersetzen der Originalbefehle durch Sonden) oder vom Tracer-System zu überwachende Speicherbereiche durch Beschreiben spezieller Hardware-Register festgelegt. Des weiteren wird dabei festgelegt, welche Daten beim Erreichen eines jeweiligen Trace-Punktes kopiert werden sollen. Weiterhin werden Sonderfunktionen festgelegt, die beim Erreichen eines Trace-Punktes jedesmal ausgeführt werden sollen. Bei den genannten Sonderfunktionen kann es sich z. B. um zusätzliche Bedingungen handeln, die beim Erreichen eines Trace-Punktes erfüllt sein müsen (z. B. Stop-Bedingungen oder Events für andere Tools, wie z. B. den Betriebssystem-Tracer, der Betriebssystemanrufe mitprotokolliert oder andere Spezial-Tracer, wie z. B. den Call-Tracer, der den Nachrichtenfluß innerhalb der vermittlungstechnischen Software mitprotokolliert).

Die vom Bediener in dem ersten Verfahrensschritt festgelegten Definitionen werden schließlich abschließend mit einem Namen zusammengefaßt und unter diesem Namen in einem Trace-Zwischenspeicher im Datenspeichersegment des Tracer-Systems zwischengespeichert.

Alle im ersten Verfahrensschritt getätigten Eingaben können symbolisch erfolgen, d. h. in einer Syntax, die einem Source-Code ähnlich ist.

In einem zweiten Verfahrensschritt werden durch ein Generierungsmittel (GEN) anhand der Definitionen im ersten Verfahrensschritt spezielle Programmstücke generiert, die im Programmspeicher abgelegt werden und an den zugehörigen Trace-Punkten später aufgerufen werden. Diese Programmstücke werden im folgenden als "Trace-Routinen" bezeichnet. Zur Erzeugung dieser Trace-Routinen enthält das erfindungsgemäße Tracer-System einen kleinen Compiler.

Die Trace-Routinen werden nach ihrer Erzeugung durch den Compiler im Programmspeicher abgelegt, damit sie aufgerufen werden können, sobald ein Trace-Punkt erreicht wird. Die Trace-Routine führt dann selbst alle Trace-Funktionen aus, bzw. generiert die Events. Danach kann das getestete Programm mit Hilfe einer Code-Simulation, die weiter unten erläutert wird, fortgesetzt werden.

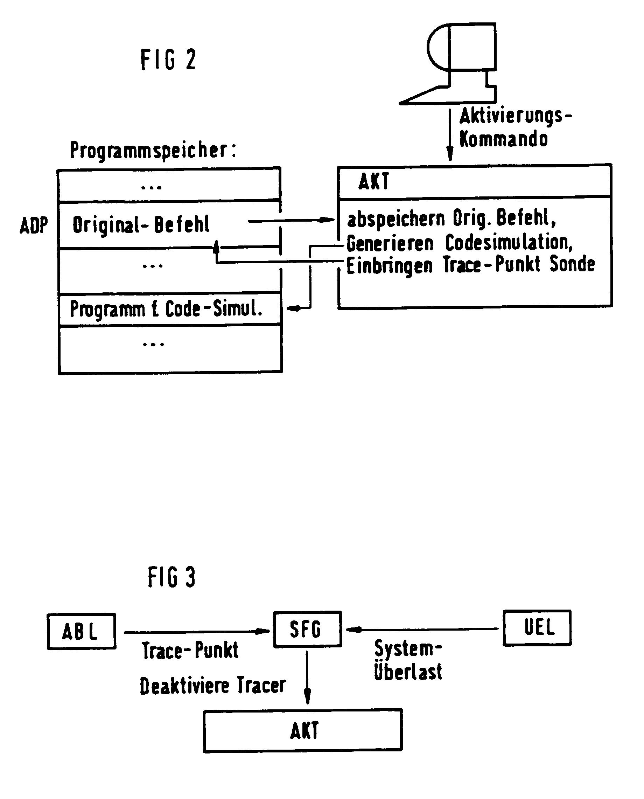

In einem dritten Verfahrensschritt wird der eigentliche Trace-Vorgang durch den Bediener mit Hilfe eines Aktivierungsmittels AKT aktiviert. Figur 2 zeigt die Wirkungsweise des Aktivierungsmittels AKT.

Zur Ausführung der Aktivierung speichert das Aktivierungsmittel zunächst den an einer Trace-Punkt-Adresse ADP befindlichen Original-Befehl in dem Trace-Zwischenspeicher des Tracer-Systems ab und bringt sodann die Sonde für den Trace-Punkt in den Code ein, bzw. aktiviert spezielle Debug-Register des Microprozessors. Der Trace-Vorgang kann auch durch Zeitgeber oder andere Events aktiviert werden. Ein Trace-Vorgang TV besteht darin, daß das zu testende Programm jeweils bis zu einem Trace-Punkt ausgeführt wird, an diesem sodann die für diesen Trace-Punkt erzeugte Trace-Routine ausgeführt wird und schließlich die Ausführung des zu testenden Programms fortgesetzt wird.

Das Aktivierungsmittel beinhaltet außer den Mitteln zum Aktivieren des Trace-Vorgangs auch Mittel zum Deaktivieren des Trace-Vorgangs durch den Bediener. Von der Deaktivierung durch den Bediener ist die Deaktivierung durch Stopbedingungen oder Events für andere Tools (siehe Verzweigungsblock "STOP?" in Figur 1) zu unterscheiden.

In einem vierten Verfahrensschritt kann der Bediener nach der Deaktivierung des Trace-Vorgangs die durch den Trace-Vorgang gesammelten Daten von einem Ausgabemittel (AUS) getrennt anfordern. Aufgrund einer solchen Anforderung werden die angeforderten Daten aus dem Trace-Zwischenspeicher gelesen und gemäß der Definition der Trace-Punkte symbolisch ausgegeben.

Während des Trace-Vorgangs wird das System nur minimal dynamisch beeinflußt, da der Aufruf der Trace-Routinen dynamisch optimiert wird und das erfindungsgemäße Tracer-System alle Möglichkeiten des Microprozessors ausnutzt, um das getestete Programm möglichst schnell wieder fortzusetzen.

Die symbolische Ein- und Ausgabe mit Hilfe der Eingabe- und Ausgabemittel ist durch Zugriff auf die beim Compilieren erstellten Symboltabellen realisiert.

Beim Einbringen der Sonden für die Trace-Punkte muß das Aktivierungsmittel AKT den Maschinencode des getesteten Programms verändern, indem es einen Originalbefehl mit Hilfe eines Trap- oder Interrupt-Befehls mit der entsprechenden Sonde des jeweiligen Trace-Punktes überschreibt. Wird nun während des Ablaufs des zu testenden Programms ein Trace-Punkt erreicht, so verzweigt der Prozessor zunächst zum Tracer-System. Dieses sucht sodann die zugehörige Trace-Routine und führt sie aus. Danach wird mit Hilfe eines kleinen Programms zur Code-Simulation gewährleistet, daß das zu testende Programm sofort fortgesetzt wird, und zwar mit dem überschriebenen Originalbefehl.

Zur Realisierung einer herkömmlichen Fortsetzung des getesteten Programms müßte ein herkömmliches Tracer-System - wie es jeder konventionelle Debugger tut - zunächst den durch die Trace-Punkt-Sonde veränderten Originalcode wiederherstellen, den überschriebenen Originalbefehl ausführen, erneut zum Aktivierungsmittel des Tracer-Systems verzweigen, um die Sonde wieder einzubringen, und kann erst dann das getestete Programm hinter der Sonde fortsetzen.

Bei der Realisierung, die das Ausführungsbeispiel des erfindungsgemäßen Tracer-Systems verwendet und die im folgenden als Code-Simulation bezeichnet wird, werden die beiden Schreibvorgänge im Programmspeicher (Originalcode wiederherstellen, Sonde erneut einbringen) mit der zugehörigen Schreibschutz- und Cache-Behandlung und die zweite Programmunterbrechung (erneute Verzweigung zum Aktivierungsmittel) vermieden und dadurch erheblich Zeit eingespart.

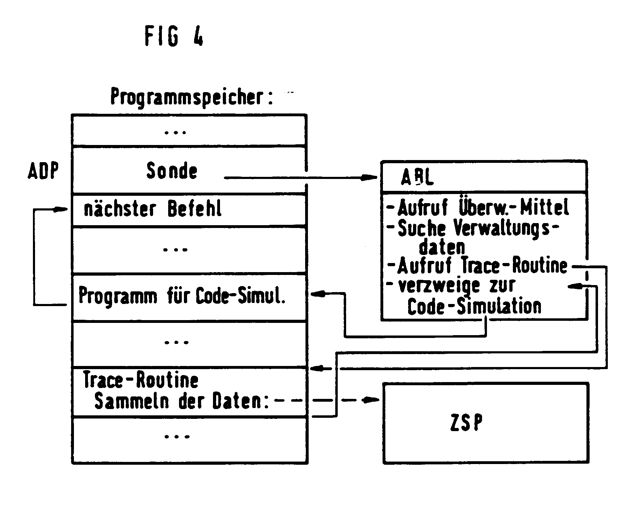

Die erfindungsgemäße Code-Simulation besteht darin, daß bereits nach dem Abspeichern des Original-Befehls durch das Aktivierungsmittel mit Hilfe eines erfindungsgemäßen Fortsetzungsmittels (im Aktivierunsgmittel enthalten) ein kleines Programm (Zusatzcode) erzeugt wird, (siehe Figur 2), das zur Simulation dieses Originalbefehls dient, das die Rücksprungadresse zum getesteten Programm miteinschließt und das nach Ablauf der Trace-Routine gestartet wird (siehe Figur 4).

Eine Code-Simulation ist besonders bei solchen Prozessoren vorteilhaft, die nur wenige Befehle kennen, die von ihrer Adresse im Arbeitsspeicher, bzw. dem aktuellen Wert des Programmzählers abhängen (z. B. der Befehl "Springe 20 Bytes zurück"). Dies ist z. B. bei RISC-Prozessoren der Fall.

Weiterhin kann bei den meisten RISC-Prozessoren dadurch Zeit eingespart werden, daß in den TRAP-Befehl, der für die Trace-Punkt-Sonde verwendet wird, bereits eine Trace-Punkt-Nummer eincodiert wird, die ein Suchen der Trace-Routine bzw. der für den Trace-Vorgang nötigen Verwaltungsdaten des Tracer Systems erleichtert.

Eine weiteres wichtiges Software-Mittel des Tracer-Systems für den Einsatz in laufenden Realzeitsystemen, z. B. Vermittlungssystemen, ist ein Überwachungsmittel SFG zur sogenannten "dynamische Selbstkontrolle", das im folgenden mit Hilfe der Figur 3 näher beschrieben wird.

Während eines Trace-Vorgangs überwacht das Tracer-System sich selbst, indem das Überwachungsmittel SFG ermittelt, wie stark das Tracer-System das laufende Realzeitsystem belastet, d. h. wieviel Rechenzeit es belegt. Werden dabei bestimmte Belastungsschwellwerte überschritten, so schaltet sich das erfindungsgemäße Tracer-System mit Hilfe des Uberwachungsmittels selbständig aus.

Das Überwachungsmittel SFG wird an jedem Trace-Punkt durch ein Ablaufmittel ABL zur Steuerung des Ablaufs des Trace-Vorgangs aufgerufen und zählt dabei immer zwei globale Zähler weiter. Der eine Zähler zählt dabei wieviele Trace-Punkte getroffen werden, während der andere Zähler die Anzahl der gesammelten Daten zählt. In bestimmten Zeitintervallen werden die beiden Zähler gegen Maximalwerte geprüft und zurückgesetzt. Stellt das Überwachungsmittel anhand der beiden Zähler oder anhand einer Überlast-Information über eine Schnittstelle zu einem Überlastabwehrsystem UEL des Realzeitsystems fest, daß ein Fortsetzen des Trace-Vorgangs den Systembetrieb gefährden würde, so veranlaßt das Überwachungsmittel selbsttätig über das Aktivierungsmittel die Deaktivierung aller Trace-Punkte Schritt für Schritt, ohne für diese Deaktivierung zu viel Zeit an einem Stück zu belegen.

Das Überwachungsmittel SFG zur dynamischen Selbstkontrolle kann vom Bediener ausgeschaltet werden, wenn eine Fehleranalyse unter Überlastbedingungen erforderlich ist. Dieses Ausschalten kann auf bestimmte Überlast-Stufen beschränkt werden.

Figur 4 zeigt die Wirkungsweise des bereits erwähnten Ablaufmittels ABL zur Steuerung des Ablaufs des Trace-Vorgangs. Das Ablaufmittel wird an jedem Trace-Punkt aufgerufen und veranlaßt daraufhin verschiedene Aktionen. Zunächst ruft es das Überwachungsmittel SFG auf. Sodann sucht es die für einen Trace-Punkt zur Steuerung des weiteren Ablaufs benötigten Verwaltungsdaten. Daraufhin erfolgt der Aufruf der Trace-Routine, die die an einem Trace-Punkt gewünschten Daten sammelt und anschließend in einen Trace-Zwischenspeicher ZSP abspeichert. Schließlich ruft das Ablaufmittel das Programm zur Code-Simulation auf, das nach seinem Abschluß selbständig zu dem hinter dem Trace-Punkt liegenden nächsten Befehl des zu testenden Programms springt.

## Patentansprüche

1. Tracer-System zur Fehleranalyse von Programmen in laufenden Realzeitsystemen, mit
a) Aktivierungsmitteln, die bewirken, daß an bestimmten Programm-Punkten sog. Trace-Punkten, bestimmte Funktionen durchgeführt werden,
b) einem Ablaufmittel (ABL), das den Ablauf des Trace-Vorgangs steuert und ein unmittelbares Fortsetzen des getesteten Programms nach der Auführung der Funktionen an einem Trace-Punkt veranlaßt,
**gekennzeichnet durch**
c) ein Eingabemittel (EIN), das die Eingabe von Trace-Punkten und der dazugehörigen Funktionen während des Laufs des Realzeitsystems ermöglicht,
d) einem Generierungsmittel (GEN), das es ermöglicht, während des Programmlaufs Trace-Routinen zur Ausführung der vorher definierten Funktionen zu erzeugen sowie Speicherbereiche (ZSP) zur Aufnahme der von den Trace-Routinen zu ermittelnden Daten anzulegen.

2. Tracer-System nach Anspruch 1,
**gekennzeichnet durch**
ein Fortsetzungsmittel, das für jeden Trace-Punkt jeweils ein Programm zur Simulation des letzten Original-Befehls erzeugt, wobei dieses Programm die Rücksprungadrese zum getesten Programm mit einschließt und vom Ablaufmittel (ABL) nach der Ausführung der Trace-Routine gestartet wird.

3. Tracer-System nach Anspruch 1 oder 2,
**dadurch gekennzeichnet,**
daß das Aktivierungsmittel in jeden einzubringenden Umleitungsbefehl eine Trace-Punkt-Nummer eincodiert, die als Index zu den vom Ablaufmittel benötigten Verwaltungsdaten des Trace-Punktes dient.

4. Tracer-System nach einem der Ansprüche 1 bis 3,
**gekennzeichnet durch**
ein Überwachungsmittel (SFG), das
a) überwacht, wie stark das Tracer-System während des Trace-Vorgangs das Realzeitsystem belastet,
b) den Trace-Vorgang deaktiviert, falls ein bestimmter Belastungsschwellwert überschritten wird.

## Revendications

1. Système de dépistage pour l'analyse d'erreurs de programmes dans des systèmes en temps réel pendant leur fonctionnement, comportant
a) des moyens d'activation, qui font exécuter en des points déterminés du programme, ce que l'on appelle des points de dépistage, des fonctions déterminées,
b) un moyen (ABL) de déroulement, qui commande le déroulement de l'opération de dépistage et qui provoque une poursuite immédiate du programme testé après l'exécution des fonctions en un point de dépistage,
caractérisé par
c) un moyen (EIN) d'entrée, qui permet d'entrer des points de dépistage et les fonctions associées pendant le fonctionnement du système en temps réel,
d) un moyen (GEN) de génération, qui permet de produire, pendant le cours du programme, des routines de dépistage pour l'exécution des fonctions définies avant ainsi que d'établir des zones (ZSP) de mémoire pour la réception des données à déterminer par les routines de dépistage.

2. Système de dépistage suivant la revendication 1,
caractérisé par
un moyen de poursuite, qui produit pour chaque point de dépistage un programme de simulation de la dernière instruction originelle, ce programme incluant l'adresse de retour au programme testé et étant mis en route par le moyen (ABL) de déroulement après l'exécution de la routine de dépistage.

3. Système de dépistage suivant la revendication 1 ou 2,
caractérisé en ce que
le moyen d'activation code, dans chaque instruction de déviation à introduire, un numéro de point de dépistage, qui sert d'indexe aux données de gestion du point de dépistage, qui sont nécessaires au moyen de déroulement.

4. Système de dépistage suivant l'une des revendications 1 à 3,
caractérisé par
un moyen (SFG) de contrôle qui,
a) contrôle de combien le système de dépistage charge le système en temps réel pendant l'opération de dépistage,
b) désactive l'opération de dépistage, dans le cas où une valeur de seuil de charge déterminée est dépassée.

## Claims

1. Tracer system for analysing errors of programs in running real-time systems, having
a) activation means, which cause certain functions to be carried out at certain program points, so-called trace points,
b) an executive means (ABL), which controls the operational sequence of the tracing process and instigates an immediate continuation of the tested program after the execution of the functions at a trace point,
characterized by
c) an input means (EIN), which makes possible the input of trace points and the associated functions during the running of the real-time system,
d) a generating means (GEN), which makes it possible to generate during the program run trace routines for execution of the previously defined functions and also to create memory areas (ZSP) for receiving the data to be determined by the trace routines.

2. Tracer system according to Claim 1, characterized by a continuation means, which generates for each trace point in each case a program for simulation of the last original instruction, this program including the return address to the tested program and being started by the executive means (ABL) after the execution of the trace routine.

3. Tracer system according to Claim 1 or 2, characterized in that the activation means codes into each rerouting instruction to be introduced a trace-point number, which serves as an index for the management data, required by the executive means, of the trace point.

4. Tracer system according to one of Claims 1 to 3, characterized by a monitoring means (SFG), which
a) monitors how heavily the tracer system loads the real-time system during the tracing process,
b) deactivates the tracing process if a certain loading threshold is exceeded.
